# EUROPÄISCHE PATENTSCHRIFT

(11) **EP 1 884 674 B1**
(45) Veröffentlichungstag und Bekanntmachung des Hinweises auf die Patenterteilung: **26.01.2011**
(21) Anmeldenummer: 07005537.1
(22) Anmeldetag: 17.03.2007
(51) Int. Cl.: F16D 3/76, F16D 3/50

(54) **Elastische Kupplung**
Elastic coupling
Couplage élastique

(30) Priorität: 25.07.2006 DE 102006034892
(43) Veröffentlichungstag der Anmeldung: 06.02.2008
(73) Patentinhaber: Siemens Aktiengesellschaft, 80333 München (DE)
(72) Erfinder: Peters, Robert, 46399 Bocholt (DE); Jansen, Andre, 46325 Borken (DE)

(56) Entgegenhaltungen:
- EP-A- 0 462 356
- DE-A1- 3 545 027
- DE-U1- 8 912 387
- US-A- 1 733 771

## Beschreibung

Die Erfindung betrifft eine elastische Kupplung mit den Merkmalen des Oberbegriffs des Anspruches 1.

Derartige hochelastische, ein Gummischeibenelement enthaltende Kupplungen eignen sich besonders zur Kopplung von Maschinen mit einem stark ungleichförmigen Drehmomentenverlauf oder beim Auftreten eines großen radialen, axialen oder winkligen Versatzes der Kupplungshälften.

Aus dem industriellen Einsatz sind Gummischeibenkupplungen bekannt, in denen zwischen einem inneren und äußeren metallischen Ring eine an den Zylinderflächen anvulkaniserte Gummiringscheibe eingefügt ist. Die inneren und äußeren metallischen Ringe wiederum sind jeweils Teil zweier Hälften einer Kupplung und verbinden in einem Wellenstrang die Antriebs- mit der Abtriebswelle. Die Schwingungseigenschaften lassen sich über die Größe der Gummischeibe und die Härte des Gummiwerkstoffs einstellen.

Als Form der Überlastsicherung in stationären industriellen Kupplungen ist eine am Außenumfang des Gummischeibenelements angebrachte Nockenverzahnung aus der DE 35 45 027 A1 bekannt. Die am Außenumfang des Gummielements angebrachte Nockenverzahnung greift in eine Innenverzahnung am äußeren Ring der Kupplung ein. Im normalen Betriebsfall überträgt die spielfreie, formschlüssige Paarung der Verzahnung das eingeleitete Drehmoment sicher auf die abtriebseitige Kupplungshälfte. Bei deutlicher Überlast rutscht die Kupplung an der äußeren Verzahnung durch und schützt die nachfolgenden Einheiten. Bei seltener Überlast wird das Gummischeibenelement nicht beschädigt und bleibt einsatzbereit. Ein weiterer Vorteil dieser Kupplung ist die mögliche Steckmontage der Kupplungselemente.

Der Kraftfluss im Antriebsstrang wird immer dann dauernd unterbrochen, wenn die Gummischeibe zwischen dem inneren und äußeren Ring der Kupplung aufgrund von Werkstoffversagen durch z. B. Alterung oder Überlastung zerstört wird. In dem Fall schlägt die Kupplung durch und trennt den Antrieb vom Abtrieb. Eine solche Unterbrechung ist unproblematisch, falls die starr aufgestellten Maschinenteile über gelagerte Wellen verfügen. Nachteilig ist eine Unterbrechung jedoch beispielsweise bei dem Einsatz einer herkömmlichen hochelastischen Gummischeibenkupplung in Fahrzeugen.

Insbesondere im Eisenbahnbetrieb wird zum Antrieb eines Generators zur Erzeugung elektrischer Energie für das Bordnetz die Drehbewegung an der Welle eines Räderpaares abgegriffen, die Drehzahl in einem Getriebe erhöht und mittels einer Gelenkwelle über größere Entfernungen zu einem Generator geführt. Zwischen dem Generator und der Gelenkwelle dämpft eine hochelastische Gummischeibenkupplung als Vorschaltelement unerwünschte Ungleichförmigkeiten aus dem Antrieb. Das Getriebe und der Generator sind an unterschiedlichen Stellen am Fahrzeug oder Drehgestell angebracht. Da zur Erhöhung des Fahrkomforts und zur Abfederung der Schwingungsanregung aus den Fahrgleisen die Einzelkomponenten des Fahrzeugs zueinander verschiebbar und federnd aufgehängt sind, kommt es immer zu einer relativen Verlagerung der Antriebskomponenten zueinander. Im normalen Betrieb gleicht eine Gelenkwelle diese Verlagerung aus. Sobald die hochelastische Gummikupplung aber ausfällt, tritt ein besonders kritischer Betriebszustand ein. Die durchschlagende Kupplung ist nicht mehr in der Lage, die Gelenkwelle zu führen und wird in unkontrollierten Bewegungen zu Kollisionen von Maschinenteilen führen und damit möglicherweise schwere Unfälle verursachen.

Bekannte Konstruktionslösungen versuchen für den Notfall der Zerstörung des Gummischeibenelements über eine Gleitlagerführung die Gelenkwelle in der abtriebsseitigen Kupplungshälfte drehbeweglich abzustützen. Zwar kann hierdurch die durchschlagende Gelenkwelle kurzzeitig geführt werden. Um aber im Normalbetrieb keine Reibungsverluste zu erzeugen, muss der Spalt im Gleitlager relativ groß sein. Im Notfall kommt es hierdurch immer noch zu einer erheblichen radialen schlagenden Bewegung der Kupplungshälften zueinander mit der Folge einer nachteiligen Geräuschanregung. Außerdem kann die Reibungswärme aufgrund fehlender Kühlung nicht in ausreichender Größenordnung abgeleitet werden. Die weichen Buntmetalle der Gleitlagerschalen werden durch die Wärmeentwicklung besonders schnell zerstört. Die Lösung mit der Gleitlagerführung führt nur bei sofortiger Stillsetzung der Anlage zu einem sicheren Betriebsverhalten. Eine solche Sicherheitsanforderung lässt sich nicht immer erfüllen.

Eine in stationären Antrieben bekannte Überlastsicherung durch eine trennbare Nockenverzahnung zwischen der Gummischeibe und dem innenverzahnten Außenring der zweiten Kupplungshälfte ist aufgrund des schlechten Betriebsverhalten selbst bei einer Ausführung mit einer Gleitlagerabstützung für den Notfall in mobilen Anlagen aus Sicherheitsgründen nicht möglich. Um trotzdem mögliche Schäden im Antriebsstrang durch seltene Überlastspitzen bewältigen zu können, wird das Gummischeibenelement so ausgelegt, dass es als schwächstes Glied in der Kette bei zu hoher Last zerstört wird. Eine solche Maßnahme ist mit einem hohen Maß an Unsicherheit behaftet und führt nicht sicher zu dem gewünschten Ergebnis. Stattdessen reißt bei hohen Überlastspitzen die Verschraubung der Gelenkwelle am Kupplungsgehäuse ab.

Insbesondere Anwendungen mit höchsten Anforderungen an einen langen unterbrechungsfreien und zuverlässigen Betrieb lassen sich mit den bekannten Konstruktionslösungen nur unter erheblichem überwachungstechnischen Aufwand mit hohem Risiko beherrschen.

Aus der DE 89 12 387 U ist eine torsionsschwingungsgedämpfte Riemenscheibe bekannt, bei der ein Riemenscheibenring über Dämpfungselemente mit einer Riemenscheibennabe verbunden ist. In einem axialen Abstand von dem Dämpfungselement ist ein Lager angeordnet, das die Aufgabe hat, die durch den Keilriemen ausgeübten radialen Scherkräfte aufzunehmen und daher ständig im Einsatz ist.

Ein aus der US 1,733,771 A bekannter flexibler Antrieb besteht aus einer antreibenden Welle mit aufgesetzter Büchse, die von einem topfförmigen, mit einer Radscheibe verbundenen Gehäuse konzentrisch umgeben ist. Zwischen der Büchse und dem Gehäuse sind drehmomentübertragende elastische Elemente angeordnet. Seitlich von den elastischen Elementen ist das Gehäuse auf der Büchse in Lagern gelagert, die die Aufgabe haben, ein Taumeln der Antriebselemente zu verhindern. Daher sind die Lager ständig im Einsatz.

Der Erfindung liegt die Aufgabe zugrunde, die gattungsgemäße elastische Kupplung so zu gestalten, dass nach einem Ausfall des Gummischeibenelements Schäden an den oder durch die miteinander gekoppelten Maschinenteile mit einfachen Mitteln und sicher vermieden werden.

Die Aufgabe wird bei einer gattungsgemäßen elastischen Kupplung durch die kennzeichnenden Merkmale des Anspruches 1 gelöst. Vorteilhafte Ausgestaltungen sind Gegenstand der Unteransprüche.

Die erfindungsgemäße elastische Kupplung ist für den Notfall mit einer drehbeweglichen Wälzlagerung versehen, die bei einem Ausfall des Gummischeibenelementes zu einer definierten Führung der Kupplungshälften zueinander führt. Darüber hinaus ermöglicht die Lagerung die Integration einer einfachen und zuverlässigen mechanischen Überlastsicherung in die hochelastische Kupplung.

Mehrere Ausführungsbeispiele der Erfindung sind in der Zeichnung dargestellt und werden nachfolgend zusammen mit den mit der Erfindung verbundenen Vorteilen näher erläutert. Es zeigen:

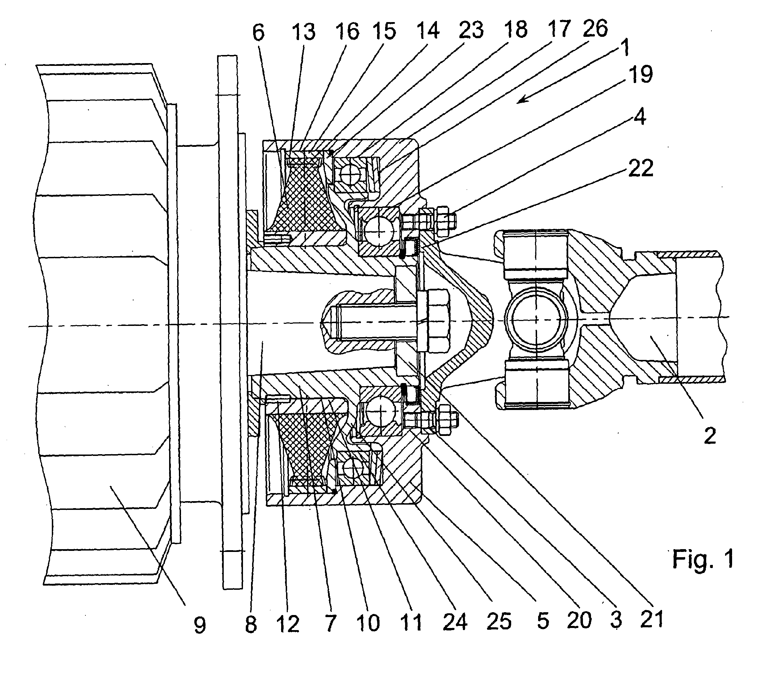

- Fig. 1: den Längsschnitt durch eine hochelastische Gummischeibenkupplung,
- Fig. 2: den Schnitt durch das Gummischeibenelement der hochelastische Gummischeibenkupplung nach Fig. 1 und
- Fig. 2a: den Schnitt durch das Gummischeibenelement der hochelastischen Gummischeibenkupplung nach Fig. 1 gemäß einer anderen Ausführungsform.

Eine hochelastische Kupplung 1 ist auf der einen Seite über eine Gelenkwelle 2 mit einem nicht gezeigten Antrieb und auf der anderen Seite mit einem Generator 9 als einer angetriebenen Arbeitsmaschine verbunden. Die genannten Maschinenteile sind auf einem Fahrzeug angeordnet.

Die hochelastische, als Gummischeibenkupplung ausgebildete Kupplung 1 besteht aus einer ersten Kupplungshälfte 5 und aus einer zweiten Kupplungshälfte 7. Eine Gelenkwelle 2 weist einen Flansch 3 auf, der über Stiftschrauben 4 mit der ersten Kupplungshälfte 5 verbunden ist. Die zweite Kupplungshälfte 7 sitzt auf einem kegeligen Wellenzapfen 8 einer angeschlossenen Arbeitsmaschine, z. B. eines Generators 9. Zwischen beiden Kupplungshälften 5, 7 ist ein Gummischeibenelement 6 in Form einer sich radial erstreckenden, ringförmigen Scheibe aus einem elastischen Werkstoff vorgesehen. Antriebsseitig leitet die Gelenkwelle 2 die Drehbewegung über den Flansch 3 in die erste Kupplungshälfte 5 ein. Das Gummischeibenelement 6 überträgt die Drehbewegung auf die zweite Kupplungshälfte 7.

Das Gummischeibenelement 6 ist an einem inneren Ring 10 der zweiten Kupplungshälfte 7 anvulkanisiert. Der Ring 10 sitzt auf einer zylindrischen Mantelfläche 11 der zweiten Kupplungshälfte 7. Der innere Ring 10 und die zylindrische Mantelfläche 11 der zweiten Kupplungshälfte 7 sind mit einer leichten Presspassung toleriert und bilden eine reibschlüssige Verbindung. Ein formschlüssiges Sicherungselement 12 ist zwischen den inneren Ring 10 und die zylindrische Mantelfläche 11 der zweiten Kupplungshälfte 7 eingesetzt und verhindert eine Relativbewegung zwischen den beiden Teilen.

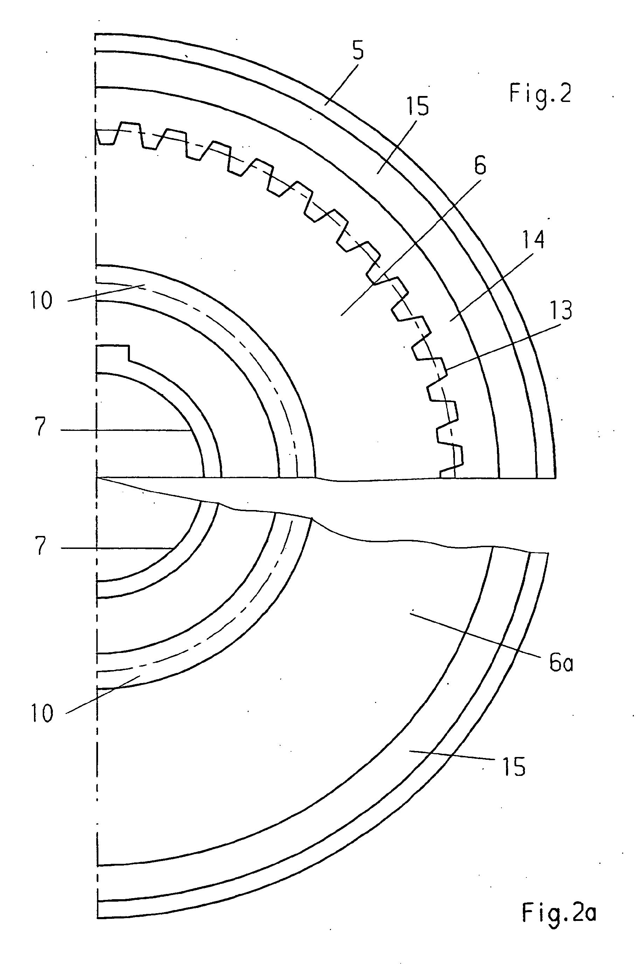

Am äußeren Umfang des Gummischeibenelements 6 ist im Gummiwerkstoff eine Nockenverzahnung 13 eingebracht, die in eine passgenaue Innenverzahnung 14 eines äußeren Ringes 15 der ersten Kupplungshälfte 5 eingreift (Fig. 2). Der äußere Ring 15 ist in einer zylindrischen Bohrung 16 mit der ersten Kupplungshälfte 5 reib- und formschlüssig verbunden. Der verzahnte Übergang von der Nockenverzahnung 13 des Gummischeibenelements 6 in die Innenverzahnung 14 des äußeren Ringes 15 bildet eine einfache mechanische Überlastsicherung, die in Verbindung mit der Kupplung 1 und deren Notlaufeigenschaften für mobile Anwendungen eine neuartige Lösung darstellt. Im Unterschied zu Kupplungen mit Gleitlagerführung nach dem Stand der Technik ist die Nockenverzahnung eine zuverlässig arbeitende Überlastsicherung, die die Auslegung des Gummischeibenelementes 6 als Sollbruchstelle überflüssig macht. Eine stärkere Dimensionierung des Gummischeibenelementes 6 führt sogar zu einer deutlichen Erhöhung der Lebensdauer der Kupplung 1. Ein weiterer Vorteil dieser Ausführung ist die erleichterte Steckmontage.

Eine gleichwertige Funktion der Bewegungsübertragung lässt sich mit dem in Fug. 2a gezeigten Gummischeibenelement 6a erzielen. Hier ist der äußere Ring 15 anstelle der Verzahnung infolge einer Vulkanisation fest mit dem Gummiwerkstoff des dargestellten Gummischeibenelementes 6a verbunden.

Die erste Kupplungshälfte 5 umschließt als topfförmiges Gehäuse 17 die innenliegende, zweite Kupplungshälfte 7 sowie das zwischen den Kupplungshälften 5, 7 eingefügte Gummischeibenelement 6 und die nachfolgend näher beschriebenen Führungslager 18 und 19. Das die erste Kupplungshälfte 5 darstellende Gehäuse 17 umschließt vorteilhafterweise die Kupplung 1 und bildet zur Stirnseite des Generators 9 einen schmalen Spalt. Diese Ausführung schützt das Gummischeibenelement 6 im Vergleich zu bekannten Lösungen vor Beschädigungen durch aufgewirbelte Steine oder aufgewirbelten sonstigen Unrat und widrige Witterungseinflüsse. Stirnseitig kann an das Gehäuse 17 die Gelenkwelle 6 angeschraubt werden. Hierzu sind in dem Gehäuse 17 mehrere Gewindebohrungen 20 um die Drehachse der Kupplung 1 angeordnet. Die Gewindebohrungen 20 nehmen die Stiftschrauben 4 auf und stellen die Verbindung mit der Gelenkwelle 2 her.

In einem geringen axialen Abstand von dem Gummischeibenelement 6 ist zwischen den beiden Kupplungshälften 5, 7 eine Führungslageranordnung vorgesehen, die in vorteilhafter Weise aus zwei Führungslagern 18, 19 besteht. Die Führungslager 18 und 19 sind als Wälzlager ausgeführt. Die Wälzlager stützen in der hochelastischen Kupplung 1 nur bei einem Ausfall des Gummischeibenelements 6 die erste Kupplungshälfte 5 auf der zweiten Kupplungshälfte 7 drehbar ab. Ein hinreichend großes Lagerspiel verringert im Normalbetrieb die Reibungsverluste auf einen vernachlässigbaren Anteil und schränkt die Funktion der hochelastischen, mit einem Gummischeibenelement versehenen Kupplung 1 im Hinblick auf den Ausgleich eines großen radialen, axialen oder winkligen Versatzes nicht ein. Die Führungslageranordnung mit den beiden Führungslager 18, 19 übt dadurch die Funktion einer Notfalllagerung aus. Die Führungslageranordnung soll ein radiales Lagerspiel aufweisen, das gerade größer ist als der durch die Härte und die Größe des Gummischeibenelementes 6 als zulässig vorgegebene Versatz der Gelenkwelle 2 in Bezug auf den Wellenzapfen 8 des Generators 9.

Die zweite Kupplungshälfte 7 sitzt auf der kegeligen Welle 8 einer Arbeitsmaschine, z. B. des Generators 9, und wird über eine Endscheibe 21 gesichert. Da die Führungslager 18, 19 aufgrund ihrer Ausbildung und Anordnung keine Umfangskräfte übertragen können, wird der Generator 9 bei unterbrochenem Kraftfluss über das als Kupplungselement dienende Gummischeibenelement 6 auch nicht weiter angetrieben und bleibt stehen. Die Führungslager 18, 19 sind als lebensdauergeschmierte abgedichtete Wälzlager ausgeführt. Zusätzlich schützen ein Wellendichtring 22 und eine Scheibe 23 die Führungslager 18 und 19 vor eindringendem Schmutz. Der entscheidende Vorteil der Wälzlager gegenüber den bekannten Kupplungsausführungen ist die zuverlässige Führung der Gelenkwelle 2 über einen langen Zeitraum, ohne selbst betriebsbedingt frühzeitig zu versagen. Der Ausfall der Kupplung 1 führt zwar zu einer Unterbrechung der Bewegungsübertragung zu der nachfolgenden Arbeitsmaschine, dem Generator 9, aber der Antrieb muss nicht wie bisher zur Vermeidung von Folgeschäden unmittelbar stillgelegt werden. Insbesondere für mobile Anwendungen in Fahrzeugen kann die Reparatur bis zum Erreichen einer geeigneten Werkstatt zurückgestellt werden. Die reibungsarmen Wälzlager führen im Notfallbetrieb zu keiner schädigenden übermäßigen Erwärmung.

Die Führungslager 18, 19 können als einfache Rillenkugellager oder vorteilhafterweise als Schrägkugellager ausgeführt werden. Insbesondere Schrägkugellager sind bei einer O-Anordnung dazu geeignet, Kippmomente aus dem Angriff der Gewichtskraft der Gelenkwelle 2 auszugleichen.

Die Führungslager 18, 19 sind auf unterschiedlichen Mantelflächen mit unterschiedlichen Durchmessern angeordnet und liegen axial versetzt nah beieinander. Dabei ist der Innendurchmesser des Führungslagers 18 größer als der Außendurchmesser des Führungslagers 19. Durch die Festlegung des Berührungswinkels und die Position des Führungslagers 18 oberhalb des Führungslagers 19 lässt sich erreichen, dass der Wirkpunkt des Führungslagers 18 mit dem Stützpunkt in der Mitte des Gummischeibenelements 6 zusammenfällt. Dadurch wird die Welle 8 des Generators 9 nicht an weiteren Stellen mit radialen Zusatzkräften belastet.

Der Innenring des Führungslagers 18 ist auf einer zylindrischen Mantelfläche 24 am Umfang eines radialen Stegs 25 der zweiten Kupplungshälfte 7 angeordnet. Der vergrößerte Stützabstand (O- Anordnung der Schrägkugellager) zwischen den Führungslagern 18, 19 ermöglicht es, den axialen Abstand zwischen den Führungslagern 18, 19 mit Hilfe der Lageranordnung auf der Mantelfläche 24 des radialen Stegs 25 sehr kurz zu halten. Aufgrund der unterschiedlichen Lagergrößen heben sich die Axialkraftanteile der Führungslager 18, 19 nicht auf. Um die erforderliche Differenz aufzubringen, erzeugen Tellerfedern 26 eine axiale Vorspannung.

## Patentansprüche

1. Elastische Kupplung zur Verbindung zweier Wellen oder gegeneinander versetzter Wellen, bestehend aus einer ersten und einer zweiten Kupplungshälfte (5, 7), zwischen denen ein kraftübertragendes, elastisches, ringförmiges Gummischeibenelement (6, 6a) angeordnet ist,
wobei in einem axialen Abstand von dem Gummischeibenelement (6, 6a) zwischen den Kupplungshälften (5, 7) mindestens ein Führungslager (18, 19) zur Führung der Kupplungshälften (5, 7) bei einem Ausfall des Gummischeibenelementes (6, 6a) angeordnet ist und das Führungslager (18, 19) als Wälzlager ausgebildet ist, wobei
zwei Führungslager (18, 19) vorgesehen sind, **dadurch gekennzeichnet, dass** die zwei Führungslager auf zylindrischen Mantelflächen mit unterschiedlichen radialen Durchmessern angeordnet sind.

2. Kupplung nach Anspruch 1,
bei der der Innendurchmesser des einen Führungslagers (18) größer ist als der Außendurchmesser des anderen Führungslagers (19).

3. Kupplung nach einem der Ansprüche 1 oder 2,
bei der die erste Kupplungshälfte (5) als ein topfförmiges Gehäuse (17) ausgebildet ist, und bei der das Gehäuse (17) das Gummischeibenelement (6, 6a) und die Führungslager (18, 19) schützend umgibt, und bei der das Gehäuse (17) stirnseitig mit einer angeschlossenen Arbeitsmaschine einen schmalen Spalt bildet.

## Claims

1. Elastic coupling for the connection of two shafts or of shafts offset with respect to one another, which consists of a first and of a second coupling half (5, 7), between which is arranged a force-transmitting elastic annular rubber-disc element (6, 6a), at least one guide bearing (18, 19) for guiding the coupling half (5, 7) in the event of a failure of the rubber-disc element (6, 6a) being arranged between the coupling halves (5, 7) at an axial distance from the rubber-disc element (6, 6a), and the guide bearing (18, 19) being designed as a rolling bearing, two guide bearing (18, 19) being provided, **characterized in that** the two guide bearings are arranged on cylindrical surface areas having different radial diameters.

2. Coupling according to Claim 1, in which the inside diameter of one guide bearing (18) is larger than the outside diameter of the other guide bearing (19).

3. Coupling according to either one of Claims 1 and 2, in which the first coupling half (5) is designed as a pot-shaped housing (17), and in which the housing (17) protectively surrounds the rubber-disc element (6, 6a) and the guide bearing (18, 19), and in which the housing (17), on the end face, forms, with a connected working machine, a narrow gap.

## Revendications

1. Accouplement élastique pour relier deux arbres ou deux arbres décalés l'un par rapport à l'autre, constitué d'une première et d'une deuxième moitiés ( 5, 7 ) d'accouplement entre lesquelles est disposé un élément ( 6, 6a ) de disque en caoutchouc, annulaire, élastique et transmettant une force, dans lequel à une distance axiale de l'élément ( 6, 6a) de disque en caoutchouc est disposé entre les moitiés ( 5, 7 ) de l'accouplement au moins un palier ( 18, 19 ) de guidage pour le guidage des moitiés ( 5, 7 ) d'accouplement s'il se produit une défaillance de l'élément ( 6, 6a ) de disque en caoutchouc et le palier ( 18, 19 ) de guidage est constitué sous la forme d'un palier à roulement, dans lequel il est prévu deux paliers ( 18, 19 ) de guidage, **caractérisé en ce que** les deux paliers de guidage sont disposés sur des surfaces latérales cylindriques ayant des diamètres radiaux différents.

2. Accouplement élastique suivant la revendication 1, dans lequel le diamètre intérieur de l'un des paliers ( 18 ) de guidage est plus grand que le diamètre extérieur de l'autre palier ( 19 ) de guidage.

3. Accouplement élastique suivant l'une des revendications 1 ou 2, dans lequel la première moitié ( 5 ) de l'accouplement est constituée sous la forme d'un boîtier ( 17 ) en forme de pot et dans lequel le boîtier ( 17 ) entoure en les protégeant l'élément ( 6, 6a ) de disque en caoutchouc et les paliers ( 18, 19 ) de guidage et dans lequel le boîtier ( 17 ) forme un intervalle étroit du côté frontal avec une machine de travail raccordé.
